# EUROPEAN PATENT APPLICATION

(11) **EP 4 755 731 A1**
(43) Date of publication of application: **10.06.2026**
(21) Application number: 25211216.4
(22) Date of filing: 24.10.2025
(51) Int. Cl.: B60S 1/38

(54) **WINDSHIELD WIPER MOUNT ASSEMBLY STRUCTURE**

(30) Priority: 06.12.2024 CN 202423024187 U
(71) Applicant: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patent Partnerschaft mbB

(57) **Abstract**

A windshield wiper mount assembly structure includes a mount (10), a wiper blade assembly (20), and a locking block (30). The mount (10) has a through-space (100) and an embedding slot (101) and multiple first positioning structures (11) around the embedding slot (101). The wiper blade assembly (20) includes a metal bracket (21) and a rubber strip (22); the metal bracket (21) has a notch (211) and is positioned within the through-space (100); the locking block (30) has a spacer column (31), a pair of slots, and multiple second positioning structures (33) and is secured in the embedding slot (101) by the mutual engagement of its second positioning structures (33) with the first positioning structures (11); the spacer column (31) engages with the notch (211); two sides of the metal bracket (21) are respectively inserted into the slots, so as to simplify the assembly structure of the wiper.

## Description

### BACKGROUND OF THE DISCLOSURE

### Technical Field

The present disclosure relates to windshield wipers, particularly relates to a windshield wiper mount assembly structure.

### Description of Related Art

In general, an automotive wiper is mounted on the outer surface of an automotive windshield and connected to an automotive wiper drive arm to enable the wiper to oscillate repeatedly across the windshield surface, thereby removing rainwater, dirt, and other foreign substances from the windshield.

Furthermore, the automotive wiper primarily includes a wiper drive arm connected to an adapter, and the bottom side of the adapter is attached to a metal bracket and a scraper. This allows the wiper drive arm to drive the adapter and press the metal bracket and scraper to clean the windshield. A mount is also provided between the adapter and the scraper for assembling the scraper and the metal bracket to complete the wiper assembly. In related-art automotive wipers, the mount and metal bracket are combined by press-fit or riveting. However, since the mount is usually made of plastic, it tends to become brittle or lose elasticity after prolonged use. This leads to the loosening of the mount and metal bracket, which potentially affects the force application of the wiper drive arm, and definitely requires improvements.

In view of the aforementioned drawbacks of the related art, the discloser of the present disclosure has made it a goal to conduct research and apply theories to overcome the drawbacks of the related art.

### SUMMARY OF THE DISCLOSURE

The primary objective of the present disclosure is to provide a windshield wiper mount assembly structure to simplify the assembly structure of a wiper.

To achieve the aforementioned objective, the present disclosure discloses a windshield wiper mount assembly structure, which includes a mount, a wiper blade assembly and a locking block. The mount has a through-space and an embedding slot communicating with the through-space, and the mount further has a plurality of first positioning structures arranged along the periphery of the embedding slot. The wiper blade assembly includes a metal bracket and a scraper mounted on the bottom side of the metal bracket. The metal bracket has a notch, and is positioned within a through-space. The locking block has a spacer column, a pair of slots located on two sides of the spacer column respectively, and a plurality of secondary positioning structures. The locking block is locked in the embedding slot by the mutual engagement between the second positioning structure and the first positioning structure. The spacer column is snapped into the notch, and the metal brackets located on two sides of the notch are inserted into the pair of slots respectively.

In an embodiment of the present disclosure, the first positioning structure includes a first stepped portion located near the wiper blade assembly, a groove located on an opposite side of the first stepped portion, and a bump disposed at the first stepped portion. The second positioning structure includes a second stepped portion, a protruding piece and a recess located on the bottom side of the spacer column. The second stepped portion is positioned in the first stepped portion, the protruding piece is positioned in the groove, and the recess is positioned with the bump.

In an embodiment of the present disclosure, the protruding piece and the second stepped portion are located on a same plate, and the plate is located at a distance from a side of the pair of slots.

In an embodiment of the present disclosure, the locking block has a plurality of hooks located with a distance from the bottom side of the slot, and the inner wall surface of the mount is positioned adjacent to the hooks.

In an embodiment of the present disclosure, the metal bracket has a plurality of hook arms spaced from each other, the hook arms are symmetrically configured and formed with a through slot, the rubber strip includes a head section, a scraping section connected to the head section and a pair of ditches disposed between the head section and the scraping section, the head section passes through the through slot, and the hook arms extend into the pair of ditches.

In an embodiment of the present disclosure, the mount has a front slot and a rear slot located in the through-space and configured to be opposite to each other, and the embedding slot is disposed between the front slot and the rear slot.

In an embodiment of the present disclosure, the windshield wiper mount assembly structure further includes an adapter base connected to the drive arm, an end of the adapter base is inserted into the front slot, and another end of the adapter base is inserted into the rear slot.

In an embodiment of the present disclosure, the adapter base has a pivot combined with the drive arm.

In an embodiment of the present disclosure, the mount has a partition, a side of the partition forms the through-space, and another side of the partition forms the accommodation space, and the adapter base is combined into the accommodation space.

In an embodiment of the present disclosure, the windshield wiper mount assembly structure further includes a pair of airflow covers combined with two ends of mount respectively and covers the wiper blade assembly.

Compared to the related art, the windshield wiper mount assembly structure of the present disclosure includes a mount, a wiper blade assembly, and a locking block. The wiper blade assembly is positioned on the bottom side of the mount and is fixed by the locking block. Furthermore, the mount of the present disclosure has an embedding slot, and a plurality of first positioning structures arranged along the periphery of the embedding slot. On the other hand, the locking block has a pair of slots and a plurality of second positioning structures. Therefore, the locking block is locked in the embedding slot by the mutual engagement of the second positioning structure and the first positioning structure, thus simplifying the assembly process of the mount and the wiper blade assembly (metal bracket and scraper), and enhancing usability and convenience.

### BRIEF DESCRIPTION OF THE DRAWINGS

FIG. 1 is a schematic view illustrating a use of a windshield wiper mount assembly structure of the present disclosure;
FIG. 2 is a schematic view showing the assembly of an adapter base of the present disclosure;
FIG. 3 is an exploded view of a windshield wiper mount assembly structure of the present disclosure;
FIG. 4 is a side view of a windshield wiper mount assembly structure of the present disclosure;
FIG. 5 is a cross-sectional view of Section 5-5 as depicted in FIG. 4;
FIG. 6 is a cross-sectional view of Section 6-6 as depicted in FIG. 4;
FIG. 7 is a cross-sectional view of Section 7-7 as depicted in FIG. 4;
FIG. 8 is a cross-sectional view of Section 8-8 as depicted in FIG. 5;
FIG. 9 is a schematic view illustrating another use of a windshield wiper mount assembly structure of the present disclosure.

### DETAILED DESCRIPTION

The detailed description and technical content of the present disclosure are illustrated below with reference to the accompanying drawings. However, the accompanying drawings are intended for the illustrative purposes only, but not intended to limit the scope of the present disclosure.

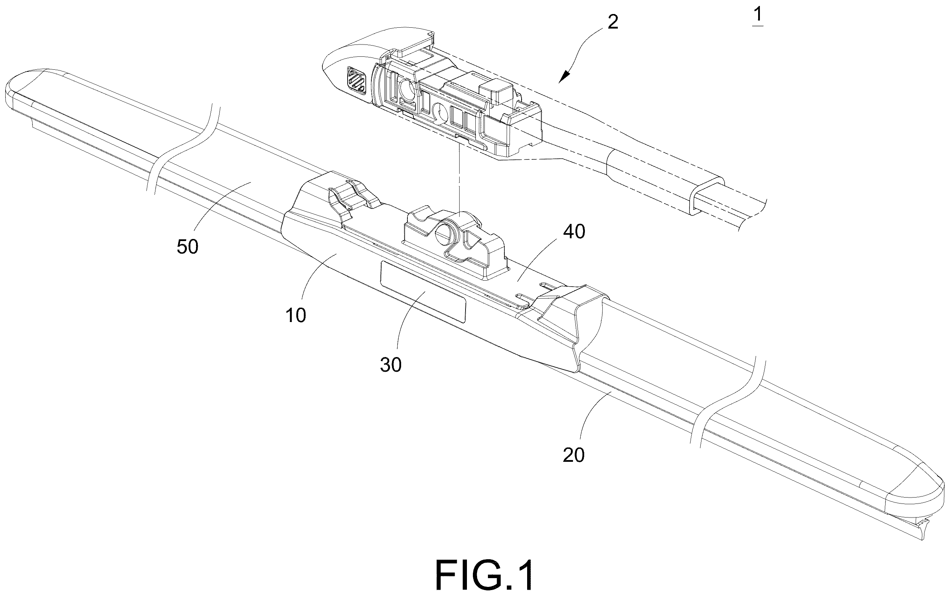

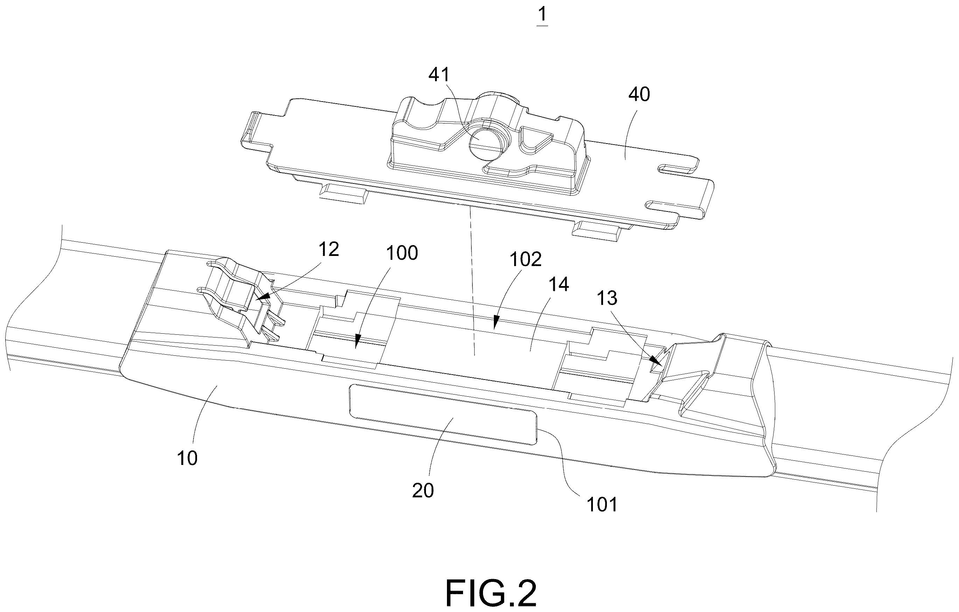

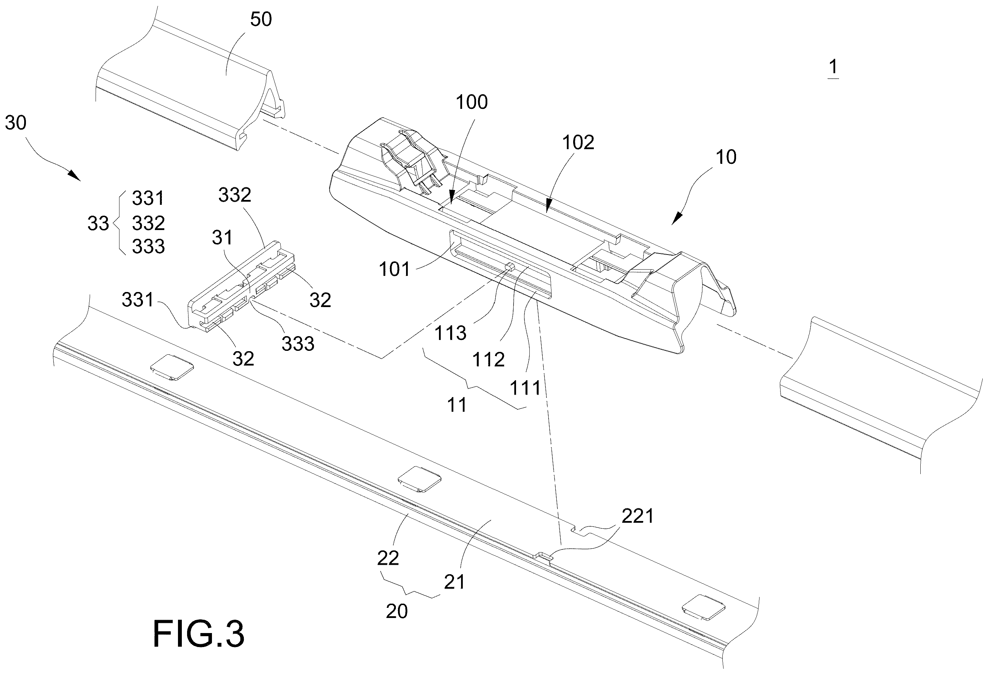

With reference to FIGS. 1 to 3 for the schematic view of a use of a windshield wiper mount assembly structure, the exploded view of an adapter base, and the exploded view of the windshield wiper mount assembly structure in accordance with the present disclosure respectively, the windshield wiper mount assembly structure 1 includes a mount 10, a wiper blade assembly 20 and a locking block 30. The wiper blade assembly 20 is located on the bottom side of the mount 10 and positioned by the locking block 30. In addition, the windshield wiper mount assembly structure 1 of the present disclosure further includes an adapter base 40 provided to be combined with a drive arm 2. The adapter base 40 is combined with the mount 10. The windshield wiper mount assembly structure 1 further includes a pair of airflow covers 50 combined with two ends of the mount 10 and cover the wiper blade assembly 20. In details, the windshield wiper mount assembly structure 1 is elaborated below.

The mount 10 of the present disclosure has a through-space 100 and an embedding slot 101 communicating with the through-space 100. In addition, the mount 10 has a plurality of first positioning structures 11 arranged along the periphery of the embedding slot 101. In an embodiment of the present disclosure, the mount 10 has a front slot 12 and a rear slot 13 located on opposite sides of the through-space 100. The embedding slot 101 is positioned between the front slot 12 and the rear slot 13. Furthermore, an end of the adapter base 40 is inserted into the front slot 12, another end of the adapter base 40 is inserted into the rear slot 13. In this embodiment, the adapter base 40 has a pivot 41 engaged with the drive arm 2, but the present disclosure is not limited thereto. It is noteworthy that the mount 10 in this disclosure has a partition 14. One side of the partition 14 forms a through-space 100, while the other side forms an accommodation space 102. The adapter base 40 is positioned within this accommodation space 102.

Furthermore, the wiper blade assembly 20 includes a metal bracket 21 and a rubber strip 22 attached to the bottom side of the metal bracket 21. The metal bracket 21 has a notch 211, and the metal bracket 21 is positioned within the through-space 100 of the mount 10. Additionally, the locking block 30 has a spacer column 31, a pair of slots 32 located on two sides of the spacer column 31 respectively, and a plurality of second positioning structures 33. The locking block 30 is locked in the embedding slot 101 by the mutual engagement of the second positioning structures 33 with the first positioning structures 11. Furthermore, the spacer column 31 is engaged with the notch 211 of the metal bracket 21, and the portions of the metal bracket 21 on two sides of the notch 211 are respectively inserted into the pair of slots 32.

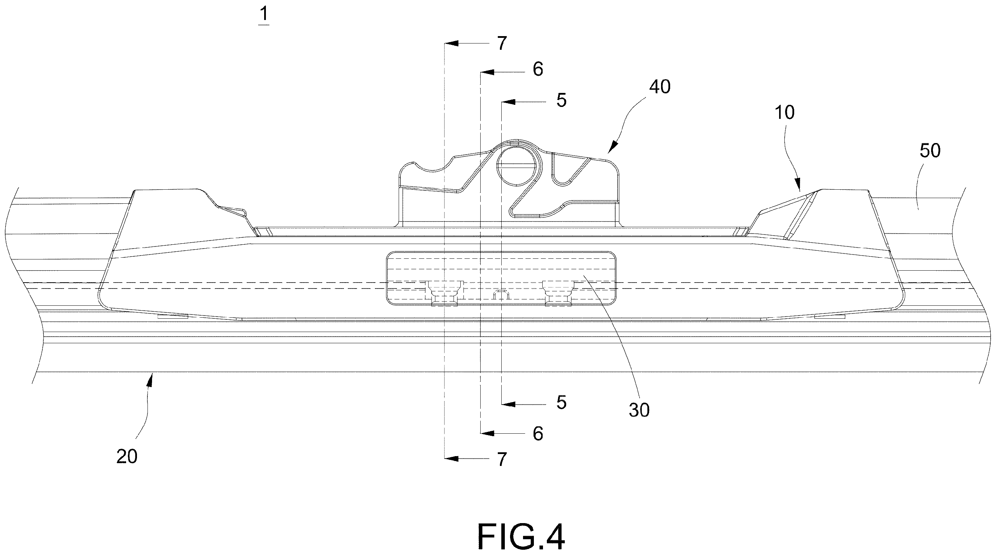

With reference to FIGS. 4 to 8 for the side views and cross-sectional views of the windshield wiper mount assembly structure of the present disclosure at different positions respectively, the mount 10 of the present disclosure has a plurality of first positioning structures 11 arranged along the periphery of the embedding slot 101. Additionally, the locking block 30 has a plurality of second positioning structures 33 corresponding to the first positioning structures 11. The locking block 30 is attached to the mount 10 by engaging the second positioning structures 33 with the first positioning structures 11.

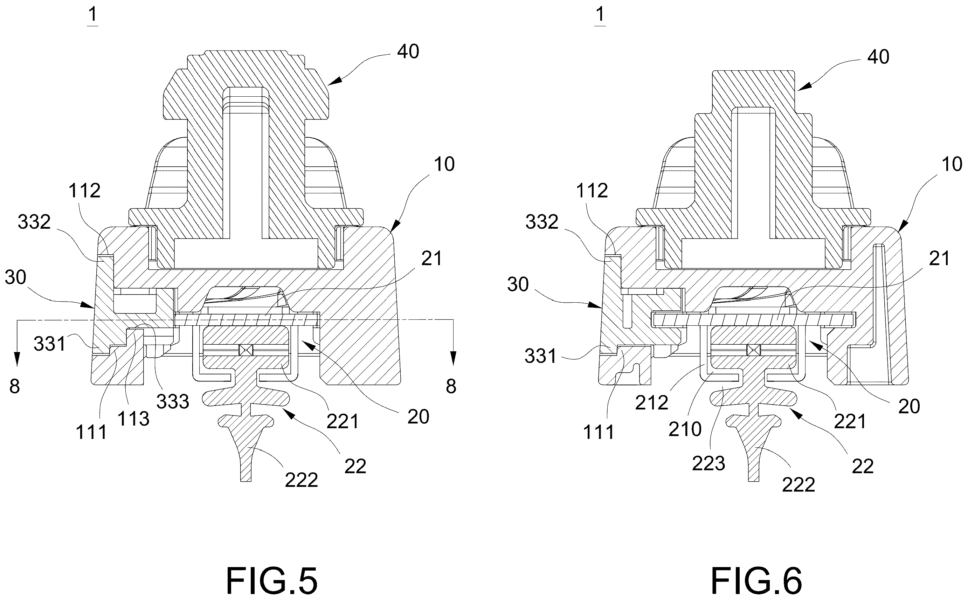

As shown in FIGS. 5 and 6, the first positioning structure 11 of the mount 10 includes a first stepped portion 111 located near the wiper blade assembly 20, a groove 112 located on the opposite side of the first stepped portion 111, and a bump 113 positioned on the first stepped portion 111. Furthermore, the second positioning structure 33 of the locking block 30 includes a second stepped portion 331, a protruding piece 332, and a recess 333 located on the bottom side of the spacer column 31. The second stepped portion 331 is positioned on top of the first stepped portion 111. The protruding piece 332 is positioned within the groove 112, and the bump 113 is positioned within the recess 333.

It is noteworthy that the wiper blade assembly 20 includes a metal bracket 21 and a rubber strip 22. The metal bracket 21 has a plurality of hook arms 212 spaced from each other. The hook arms 212 are symmetrically arranged to form a through slot 210. The rubber strip 22 includes a head section 221, a scraping section 222 connected to the head section, and a pair of grooves 223 located between the head section and the scraping section. The head section 221 is inserted into the through slot 210, and the hook arms 212 extend into the pair of grooves 223. In this way, the rubber strip 22 is securely attached to the bottom side of the metal bracket 21.

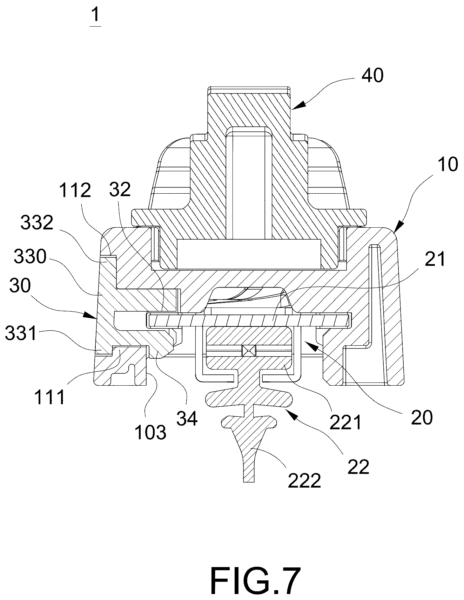

As shown in FIG. 7, the protruding piece 332 and the second stepped portion 331 are located on a same plate 330. The plate 330 is located at a distance from a side of the pair of slots 32. In addition, the locking block 30 has a plurality of hooks 34 arranged at a distance from the bottom side of the pair of slots 32, and the inner wall surface 103 of the mount 10 is positioned adjacent to the hooks 34.

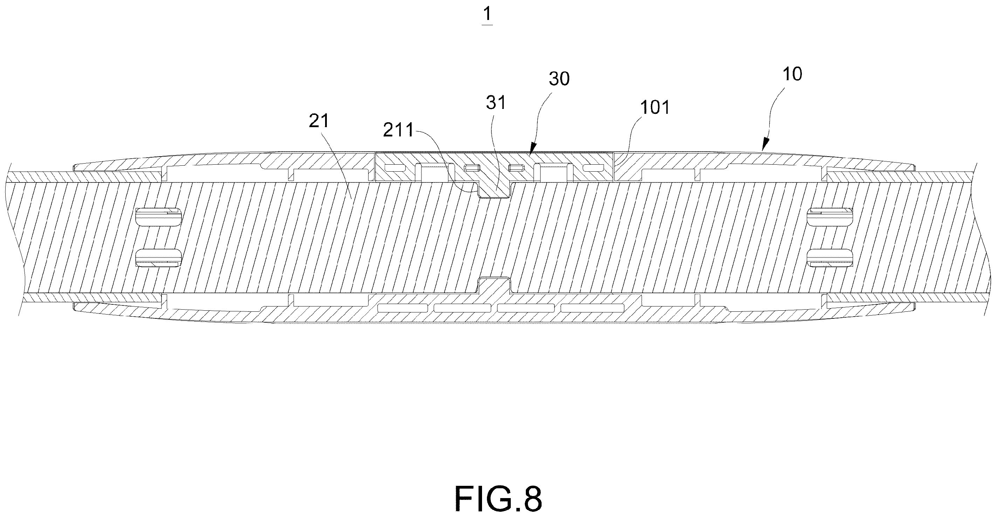

As shown in FIG. 8, the wiper blade assembly 20 of the present disclosure is located on the bottom side of the mount 10 and positioned by the locking block 30. In addition, when the locking block 30 is combined with the embedding slot 101 of the mount 10, the spacer column 31 will be snapped into the notch 211 of the metal bracket 21 to enhance the positioning effect between the two.

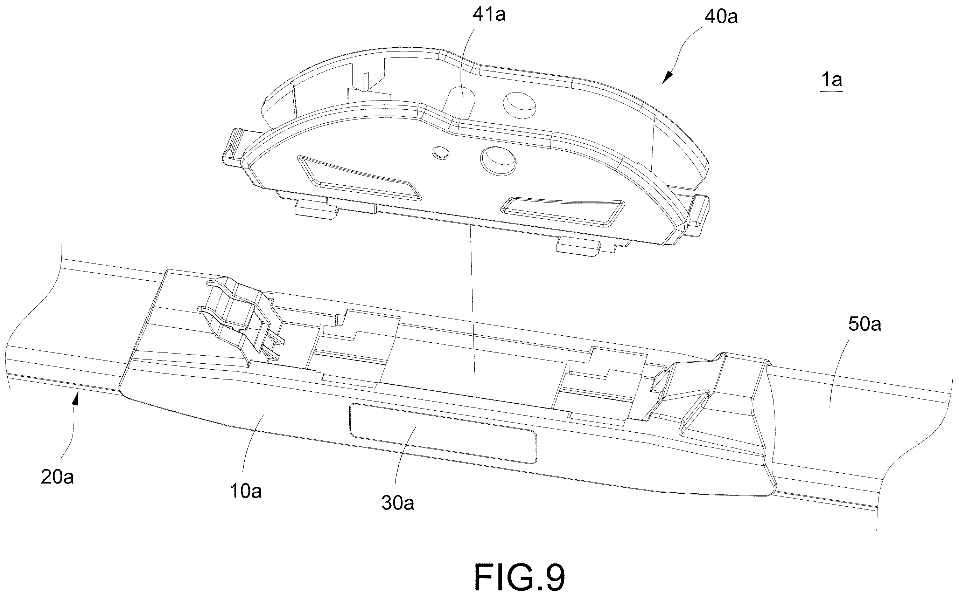

With reference to FIG. 9 for the schematic view of another use of the windshield wiper mount assembly structure in accordance with an embodiment of the present disclosure, the windshield wiper mount assembly structure 1a of this embodiment includes a mount 10a, a wiper blade assembly 20a, a locking block 30a, an adapter base 40a and a pair of airflow covers 50a. The wiper blade assembly 20a is located on the bottom side of the mount 10a and positioned by the locking block 30a. The adapter base 40a is combined with the mount 10a. The pair of airflow covers 50a are combined with two sides of the mount 10a. The difference of this embodiment lies in the design of the adapter base 40a. The adapter base 40a incorporates a pivot 41a between two side panels, which connects to the drive arm. Furthermore, the assembly of the mount 10a, the wiper blade assembly 20a, the locking block 30a, and the adapter base 40a is the same as those of the previous embodiment, and therefore the description will not be repeated here.

As will become apparent to the skilled person when studying the above disclosure, the subject-matter of the appended claims can also be combined in a different manner as specifically claimed. In particular the term "according to claim 1" and similar shall be deemed to encompass also the meaning "according to any of the preceding (antecedent) claims".

## Claims

1. A windshield wiper mount assembly structure (1), comprising:
a mount (10), with a through-space (100) and an embedding slot (101) communicating with the through-space (100), the mount (10) comprising a plurality of first positioning structures (11) arranged along a periphery of the embedding slot (101);
a wiper blade assembly (20), comprising a metal bracket (21) and a rubber strip (22) arranged on a bottom side of the metal bracket (21), the metal bracket (21) being provided with a notch (211), and the metal bracket (21) passing into the through-space (100); and
a locking block (30), comprising a spacer column (31), a pair of slots (32) and a plurality of second positioning structures (33) located on two sides of the spacer column (31) respectively, the locking block (30) being combined into the embedding slot (101) through a mutual engagement of the second positioning structures (33) and the first positioning structures (11), the spacer column (31) being snapped into the notch (211), and the metal bracket (21) located on two sides of the notch (211) being inserted into the pair of slots (32) respectively.

2. The windshield wiper mount assembly structure (1) according to claim 1, wherein the first positioning structures (11) comprises a first stepped portion (111) located near the wiper blade assembly (20), a groove (112) located on an opposite side of the first stepped portion (111) and a bump (113) disposed at the first stepped portion (111), the second positioning structures (33) comprises a second stepped portion (331), a protruding piece (332) and a recess (333) disposed on a bottom side of the spacer column (31), the second stepped portion (331) is positioned in the first stepped portion (111), the protruding piece (332) is positioned in the groove (112), and the recess (333) is positioned with the bump (113).

3. The windshield wiper mount assembly structure (1) according to claim 2, wherein the protruding piece (332) and the second stepped portion (331) are located on a same plate (330), and the plate (330) is located at a distance from a side of the pair of slots (32).

4. The windshield wiper mount assembly structure (1) according to claim 1, wherein the locking block (30) is provided with a plurality of hooks (34) located at a distance from the bottom side of the pair of slots (32), and the inner wall surface of the mount (10) is arranged adjacent to the hooks (34).

5. The windshield wiper mount assembly structure (1) according to claim 1, wherein the metal bracket (21) comprises a plurality of hook arms (212) spaced from each other, the hook arms (212) are symmetrically configured and formed with a through slot (210), the rubber strip (22) comprises a head section (221), a scraping section (222) coupled to the head section (221) and a pair of ditches (223) disposed between the head section (221) and the scraping section (222), the head section (221) passes through the through slot (210), and the hook arms (212) extend into the pair of ditches (223).

6. The windshield wiper mount assembly structure (1) according to claim 1, wherein the mount (10) comprises a front slot (12) and a rear slot (13) located in the through-space (100) and configured to be opposite to each other, and the embedding slot (101) is disposed between the front slot (12) and the rear slot (13).

7. The windshield wiper mount assembly structure (1) according to claim 6, further comprising an adapter base (40) for combining a drive arm (2), an end of the adapter base (40) being inserted into the front slot (12), and another end of the adapter base (40) being inserted into the rear slot (13).

8. The windshield wiper mount assembly structure (1) according to claim 7, wherein the adapter base (40,40a) is provided with a pivot (41,41a) coupled to the drive arm (2).

9. The windshield wiper mount assembly structure (1) according to claim 7, wherein the mount (10) comprises a partition (14), a side of the partition (14) forming the through-space (100), and another side of the partition forming an accommodation space (102), and the adapter base (40) being combined into the accommodation space (102).

10. The windshield wiper mount assembly structure (1) according to claim 1, further comprising a pair of airflow covers (50,50a) combined with two ends of the mount (10,10a) respectively and covering the wiper blade assembly (20,20a).
